# EUROPEAN PATENT SPECIFICATION

(11) **EP 1 856 618 B1**
(45) Date of publication and mention of the grant of the patent: **22.10.2014**
(21) Application number: 06715480.7
(22) Date of filing: 02.03.2006
(51) Int. Cl.: G06F 13/362

(54) **SINGLE PORT/MULTIPLE RING IMPLEMENTATION OF A DATA SWITCH**
EINZELPORT-/MEHRFACHRINGIMPLEMENTIERUNG EINES DATEN-SWITCH
MISE EN OEUVRE A PORT UNIQUE ET A ANNEAUX MULTIPLES POUR COMMUTATEUR DE DONNEES

(30) Priority: 10.03.2005 US 77330
(43) Date of publication of application: 21.11.2007
(60) Divisional application: 14181199.2
(73) Proprietor: Sony Computer Entertainment Inc., Minato-ku, Tokyo (JP); International Business Machines Corporation, Armonk, NY 10504 (US)
(72) Inventor: CLARK, Scott, Douglas, 1400 Burnet Rd., Austin, Texas, 78758 (US); JOHNS, Charles, Ray, 1400 Burnet Rd., Austin, Texas, 78758 (US); KROLAK, David, John, 1400 Burnet Rd., Austin, Texas, 78758 (US); YAMAZAKI, Takeshi, mi-Aoyama, Minato-ku, Tokyo, 1070062 (JP); BROWN, Jeffrey, Douglas, 1400 Burnet Rd., Austin, Texas, 78758 (US)
(74) Representative: Davies, Simon Robert
(86) International application number: PCT/JP2006/304659
(87) International publication number: WO 2006/095838

(56) References cited:
- EP-A- 1 327 939
- DE-C1- 4 041 235
- GB-A- 2 226 737
- JP-A- 4 156 741

## Description

### TECHNICAL FIELD

The present invention relates generally to a data switch, and more particularly, to a data switch with a single port per attached unit and multiple rings.

### RELATED ART

The transmission of data between multiple processing units within a single chip can be difficult. This problem has become important due to the proliferation of a multiple processing units on a chip. There are many specific problems relating to the transmission of data between these units on the same chip. Data coherency, substantial area on the chip, and power consumption are a few problems with these transmissions of data. Furthermore, attempting to achieve higher transfer rates exacerbates these problems. Transfer rates can be an exceptional problem when the processing units are large enough that the time required to propagate a signal across one unit approaches the cycle time of the data bus in question.

Conventional methods and/or apparatuses designed to solve these problems contain substantial drawbacks. Some solutions, such as a conventional shared processor local bus, do not achieve a high enough bandwidth. This result negatively impacts the data transfer rate on the chip. Another conventional solution is a full crossbar switch. This type of switch cross connects each port to all the other ports. This means that a full crossbar switch requires N X N connections, adding to the complexity of the switch. This solution consumes too much area on the chip and requires extensive wiring resources. It is clear that a new method or apparatus is needed enable the transmission of data between multiple processing units on the same chip, while retaining a high data transfer rate.

EP-A 1327939 discloses a bus system and a method of deciding a data transmission path are provided. The bus system includes a plurality of functional blocks, a ring bus, an arbiter which generates a bus grant signal according to a predetermined algorithm in response to a bus request from one of the functional blocks and a plurality of bus connectors each of which connects a corresponding functional block to the ring bus, transmits data from the corresponding functional block to the ring bus, and transmits data from the ring bus to the corresponding functional block.

DE 4041235 discloses a double ring bus system that supports a central computer and a number of substations, with the number of substations capable of being expanded. External communication with each substation and central unit can be made by bi-directional channels. The connections are made using bus coupler modules responding to logic modules. In a normal mode the two buses operate in parallel. In the event of a failure the bus can be switched into a cross coupled mode for testing to identify the failure.

### DISCLOSURE OF THE INVENTION

The present invention is defined in the appended claims.

A data switch, a method, and a computer program are provided for transferring data between multiple bus units in a memory system. This data switch is configured for a single port connection for each bus unit and multiple data rings. The data transfers on this data switch are managed by a central arbiter. Multiple data transfers on this data switch can be handled concurrently, which ensures a high bandwidth. Furthermore, unused segments of this data switch are not clocked, which results in a lower power consumption.

Each bus unit is connected to a corresponding data ramp with a simple control interface. A controller resides on each data ramp, which controls the data transfers from the data ramp to the bus unit and the data transfers between the data ramps. The central arbiter receives requests from the bus units, arbitrates the requests, and issues control signals. The controllers interpret the control signals and transfer the data accordingly. Each data ramp is only directly connected to the two adjacent data ramps, which reduces the amount of wiring resources. The data rings form the connection between all of the data ramps. This enables this data switch to transfer data from one bus unit to any other bus unit in the memory system. There may be four data rings, wherein two data rings transfer data clockwise and two data rings transfer data counter-clockwise.

### BRIEF DESCRIPTION OF THE DRAWINGS

For a more complete understanding of the present invention and the advantages thereof, reference is now made to the following descriptions taken in conjunction with the accompanying drawings, in which:
FIGURE 1 is a block diagram of a hybrid crossbar partially non-blocking data switch with a single port/multiple ring implementation;
FIGURE 2 is a block diagram of a ramp building block for the hybrid crossbar data switch;
FIGURE 3 is a timing diagram illustrating the data transfer process for a requesting data ramp device;
FIGURES 4A-4C are timing diagrams illustrating the data ramp controller cycles inside a data ramp device;
FIGURE 5 is a block diagram illustrating the ability of this hybrid crossbar switch to accomplish nine data transfers concurrently; and
FIGURE 6 is a flow chart depicting the process of passing one data transfer granule from a requesting device to a corresponding device.

### DETAILED DESCRIPTION

In the following discussion, numerous specific details are set forth to provide a thorough understanding of the present invention. However, those skilled in the art will appreciate that the present invention may be practiced without such specific details. In other instances, well-known elements have been illustrated in block diagram form in order not to obscure the present invention in unnecessary detail. Additionally, for the most part, details concerning network communications, electro-magnetic signaling techniques, and the like, have been omitted inasmuch as such details are not considered necessary to obtain a complete understanding of the present invention, and are considered to be within the understanding of persons of ordinary skill in the relevant art.

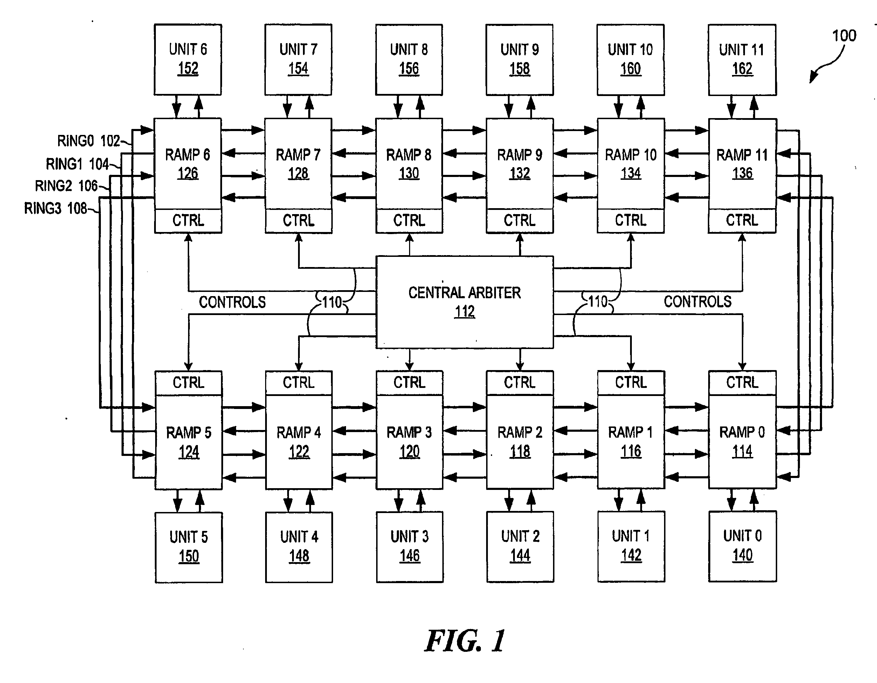

Referring to FIGURE 1 of the drawings, reference numeral 100 generally indicates a block diagram of a hybrid crossbar partially non-blocking data switch with a single port/multiple ring implementation. This hybrid crossbar switch contains four rings; Ring0 102, Ring1 104, Ring2 106, and Ring3 108. These four rings connect 12 data ramp devices; Ramp0 114, Ramp1 116, Ramp2 118, Ramp3 120, Ramp4 122, Ramp5 124, Ramp6 126, Ramp7 128, Ramp8 130, Ramp9 132, Ramp10 134, and Ramp11 136. Each data ramp device is connected to one bus unit; Unit0 140, Unit1 142, Unit2 144, Unit3 146, Unit4 148, Unit5 150, Unit6 152, Unit7 154, Unit8 156, Unit9 158, Unit10 160, and Unit 11 162, respectively. There is a central arbiter 112, which sends out control signals 110 to the data ramp devices. Each data ramp device contains a controller that interprets the control signals 110 and controls the data ramp device accordingly.

Data ramps and bus units are the devices that are described in this application, but many other similar devices may be utilized to achieve the same results as the present invention. For example, a "bus unit" is a generic term for any logical device that exchanges data with another logical device. A memory controller, an ethernet controller, a central processing unit (CPU), a peripheral component interconnect (PCI) express controller, a universal serial bus controller, and a graphics adapter unit could be a "bus unit" in this description. Furthermore, a "data ramp" is a generic term for a data transmission device in the data switch fabric.

Two data rings transfer data clockwise, Ring0 102 and Ring2 106, and two data rings transfer data counter-clockwise, Ring1 104 and Ring3 108. Each data ramp device is only connected to the two adjacent data ramp devices. For example, Ramp2 118 is only connected to Ramp1 116 and Ramp3 120. Ramp1 116 can transfer data to Ramp2 118 on Ring0 102 or Ring2 106. Ramp1 116 can receive data from Ramp2 118 on Ring1 104 or Ring3 108. Alternatively, Ramp3 120 can transfer data to Ramp2 118 on Ring1 104 or Ring3 108. Ramp3 120 can receive data from Ramp2 118 on Ring0 102 or Ring2 106. Therefore, each data ramp device can only transmit data between the data ramp devices directly adjacent to it.

The central arbiter 112 manages the flow of data around the rings, allowing the bus units to have a simple interface with the data ramp device. For example, Ramp2 118 interfaces with Unit2 144 and Ramp8 130 interfaces with Unit8 156. This connection is a Request/Grant/Receive handshake control interface. Therefore, the bus unit can only request to send data, send data when permitted, or receive data. The bus units do not need to have any awareness of the actual structure of the data switch itself. This data structure is designed to move previously agreed-upon data packets.

For example, if Unit 10 160 wanted to send data to Unit1 142 it would send out a request. The request reaches the central arbiter 112 and the arbiter 112 begins to send out control signals 110 to the necessary data ramp devices, Ramp10 134, Ramp11 136, Ramp0 114 and Ramp1 116. The central arbiter 112 also selects an available data ring, which can be Ring0 102 for this operation. Unit10 160 receives a grant from the central arbiter 112 and transmits the requested data to Ramp10 134. Ramp10 134 uses Ring0 102 to transmit this data to Ramp11 136. Ramp11 136 allows this data to pass through to Ramp0 114. Ramp0 114 allows this data to pass through to Ramp1 116. Ramp1 116 accepts this data and transmits the requested data to Unit1 142.

FIGURE 1 is only one embodiment of the present invention. The number of data ramp devices and the number of data rings can be adjusted for a specific implementation. The difference between this hybrid crossbar data switch and the conventional crossbar data switch is the amount of connections. Conventional crossbar data switches contain connections from each data ramp device to every other data ramp device. The present invention only provides for each data ramp device to be connected to the two adjacent data ramp devices.

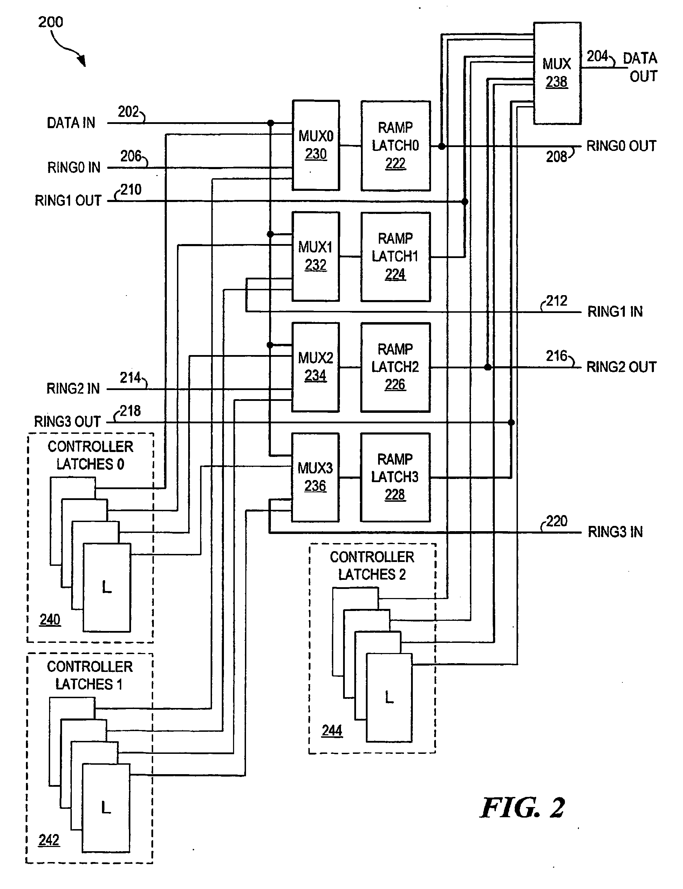

Referring to FIGURE 2 of the drawings, reference numeral 200 generally indicates a block diagram of a ramp building block for the hybrid crossbar data switch. Each data ramp device contains many of these building blocks. Data In 202 and Data Out 204 correspond to the interface between the data ramp device and the bus unit. Data In 202 refers to data received from the bus unit, and Data Out 204 refers to data transmitted to the bus unit. A multiplexor and a ramp latch are dedicated to each ring. Ramp Latch0 222 and MUX0 230 transfer data on Ring0 102. Accordingly, Ramp Latch1 224 and MUX1 232 transfer data on Ring1 104, Ramp Latch2 226 and MUX2 234 transfer data on Ring2 106, and Ramp Latch3 228 and MUX3 236 transfer data on Ring3 108.

Ring0 In 206, Ring1 In 212, Ring2 In 214, and Ring3 In 220 are inputs into MUX0 230, MUX1 232, MUX2 234, and MUX3 236, respectively. Ring0 Out 208, Ring1 Out 210, Ring2 Out 216, and Ring3 Out 218 are outputs of Ramp Latch0 222, Ramp Latch1 224, Ramp Latch2 226, and Ramp Latch3 228, respectively. The Data In 202 signal is also an input to the multiplexors, 230, 232, 234, and 236. The multiplexors, 230, 232, 234, and 236 are split in half. The upper half of the multiplexors receive the Data In 202 signal and the lower half of the multiplexors receive the ring in signals, 206, 212, 214, and 220.

The controller latches 240, 242, and 244 reside on the ramp controller. The controller latches 0 240 control the Data In signal 202 from the bus unit. If data is coming from the bus unit on the Data In 202, then the controller latches 0 240 order the correct multiplexor, 230, 232, 234, or 236 to accept the data. The controller latches 1 242 control the ring in signals, 206, 212, 214, and 220. For example, if data is coming in on the Ring1 In line 212, then the controller latches 1 242 order MUX1 232 to accept the data. Each multiplexor can only accept data from one input at a time. Therefore, if there is data coming from the bus unit on the Data In 202 to MUX1 232, then data cannot be transferred on Ring1 104 at the same time. It is the controller latches 240 and 242 that control the data flow on this data ramp.

Once the proper data channel has been selected then the multiplexors transfer the data to the ramp latches. For example, if Ring1 In data 212 has been selected by controller latches 1 242, then this data passes from MUX 1 232 to Ramp Latch1 224. Alternatively, if data from the bus unit on the Data In 202 has been selected by controller latches 0 240 to transmit on Ring2 106, then this data passes from MUX2 234 to Ramp Latch2 226.

The outputs of the ramp latches are the data out signals. Accordingly, Ramp Latch0 222 outputs Ring0 Out 208. The ramp latches outputs are also connected to another multiplexor 238. This multiplexor transmits data to the bus unit 204. The controller latches 2 244 control the multiplexor 238. For example, if the bus unit needs data from Ring3 108, then the controller latches 2 244 select the output of Ramp Latch3 228 and the multiplexor 238 transmits the data to the bus unit. If the bus unit does not need any data, then the controller latches 2 244 do not select any outputs from the ramp latches.

The controller latches, 240, 242, and 244, control the data ramp device by organizing these data transactions. Only one latch of controller latches 0 240 can be on at any given time. This means that only one ring can receive data from the bus unit at any given time. All of the latches of controller latches 1 242 can be on at any given time. Consequently, data can be transferred on all of the rings at the same time. Only one latch of controller latches 2 244 can be on at any given time. Therefore, the multiplexor 238 can only transmit data from one data ring at any given time. These sets of controller latches can control multiple ramp building blocks.

As shown in FIGURE 2, each bus unit has a send port and a receive port. These ports are connected to the data ramp devices as Data In 202 and Data Out 204, respectively. The following details are implementation specific and only describe this embodiment. These ports are each composed of a tag bus (for identifying data packets) and a data bus. The tag bus is 14 bits wide, and the data bus is 16 bytes wide. Data is transmitted in 128 byte granules (8 X 16 bytes). Each bus unit can drive data onto the bus at 16 bytes per bus cycle, and simultaneously receive data from the bus at 16 bytes per bus cycle. Therefore, the peak number of possible simultaneous transfers of 16 bytes per bus cycle is one per unit attached to the bus.

The data ramp devices provide a simple entry and exit port to the bus device's multiple ring structure. It takes one bus cycle for data to pass from the bus unit to its ramp, one bus cycle for data to pass from one data ramp to the next data ramp in the ring, and once the destination ramp is reached, it takes one bus cycle for data to pass from that data ramp to the receiving device.

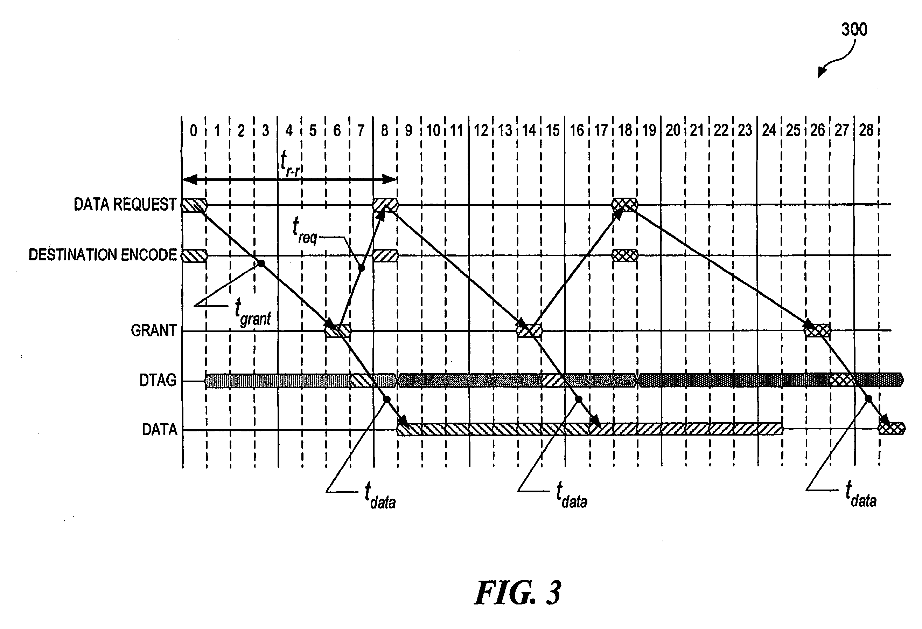

Referring to FIGURE 3 in the drawings, reference numeral 300 generally indicates a timing diagram illustrating the data transfer process for a requesting data ramp device. The following details are implementation specific and only describe this embodiment. A requesting device raises its data request line along with a destination unit ID when it requests data from its corresponding bus unit. This is shown on the Data Request line and the Destination Encode line. The central arbiter 112 arbitrates and returns a Grant pulse to the requestor and a ring-specific Grant to the corresponding data ramp controller. The Grant pulse signifies that the data transmission can begin. The minimum delay from the Data Request signal to the Grant signal (tgrant) is 6 bus cycles. The cycle after the Grant, the requester drives its DataTag on the ramp for 1 bus cycle. This DataTag identifies the data packet to follow. Three cycles after the Grant (tdata), the requester drives its Data Bus on the ramp for 8 bus cycles. Eight bus cycles signifies a whole 128 byte transfer granule. The minimum delay from Grant to the next Request (treq) is 2 bus cycles. The minimum delay from one Request to the next Request (tr-r) is 8 bus cycles. The bus unit transmits this data through the data ramp device. Overall, the bus unit propagates the Request to the central arbiter, the central arbiter sends back a Grant, and the bus unit configures the DataTag signal and sends the data.

In this process the central arbiter 112 also sends flow control signals to the downstream data ramp devices. For the receiving data ramp device, the central arbiter sends an Early Data Valid (EDV) pulse. The EDV pulse is similar to the Grant pulse, but it cues the receiver to accept data. The receiver captures the DataTag signal from the requesting ramp output for one cycle. One cycle after the EDV pulse the receiver captures the DataTag data from the tag bus, and 3 cycles after the EDV pulse the receiver collects data for 8 cycles (one granule). The controller housed on the data ramp device receives a bus-specific EDV pulse and controls the ramp output multiplexors with the same timing constraints.

During a data transfer data ramps are also utilized as passthru devices. This entails that the specific data ramp device is only passing data to the next data ramp. The central arbiter 112 sends out passthru pulses for data transfers that must traverse one or more data ramps. A data ramp receiving a passthru pulse passes data from the specified ring input to its output for 8 cycles, starting 1 cycle after the pulse is received for the Tag Bus and 3 cycles for the Data Bus.

The central arbiter 112 controls this whole process. It collects the requests, arbitrates between them, chooses an appropriate ring, and grants the requests. The arbiter 112 does not grant requests if the new data transfer conflicts with another transfer that is already in progress. If part of a ring is in use by a transfer, it allows non-overlapping transfers to exist concurrently on other parts of the ring or it allows the new transfer to follow sequentially after the trailing edge of the prior transfer. For this embodiment there is also an error bit and a partial transfer bit that is transmitted with the data packets. The error bit indicates whether there is an error with the data, and it is transferred with the data on the data bus. The partial transfer bit indicates if the data transfer is less than 128 bytes, and it is transferred with the data on the tag bus.

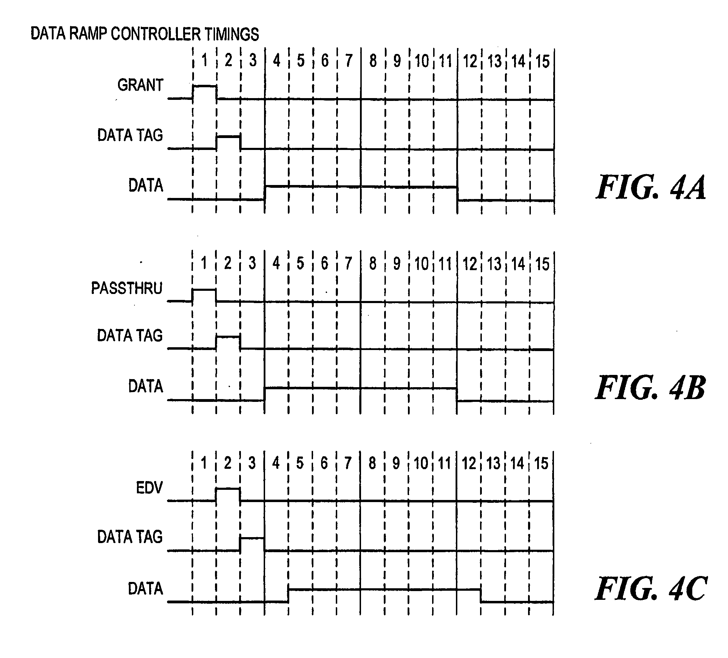

Referring to FIGURES 4A-4C of the drawings, three timing diagrams illustrate the data ramp controller cycles inside a data ramp device. The first timing diagram, FIG. 4A, illustrates the transfer of data for a requesting data ramp device. The grant pulse is received at cycle number 1. One cycle later the DataTag pulse is driven on the tag bus for one cycle. Three pulses after the grant pulse the data is driven on the data bus for 8 cycles. Cycle number 9 is the earliest cycle that can receive another grant pulse from any ring.

The second timing diagram, FIG. 4B, illustrates the transfer of data for the passthru data ramp device. The passthru pulse is received at cycle number 1. One cycle later the DataTag pulse is driven on the tag bus for one cycle. Three pulses after the passthru pulse the data is driven on the data bus for 8 cycles. Cycle number 9 is earliest cycle that can receive another passthru pulse from the same ring.

The third timing diagram, FIG. 4C, illustrates the transfer of data for the receiving data ramp device. The EDV pulse is received at cycle number 2. One cycle later the DataTag pulse is driven on the tag bus for one cycle. Three pulses after the EDV pulse the data is driven on the data bus for 8 cycles. Cycle number 10 is the earliest cycle that can receive another EDV pulse from any ring.

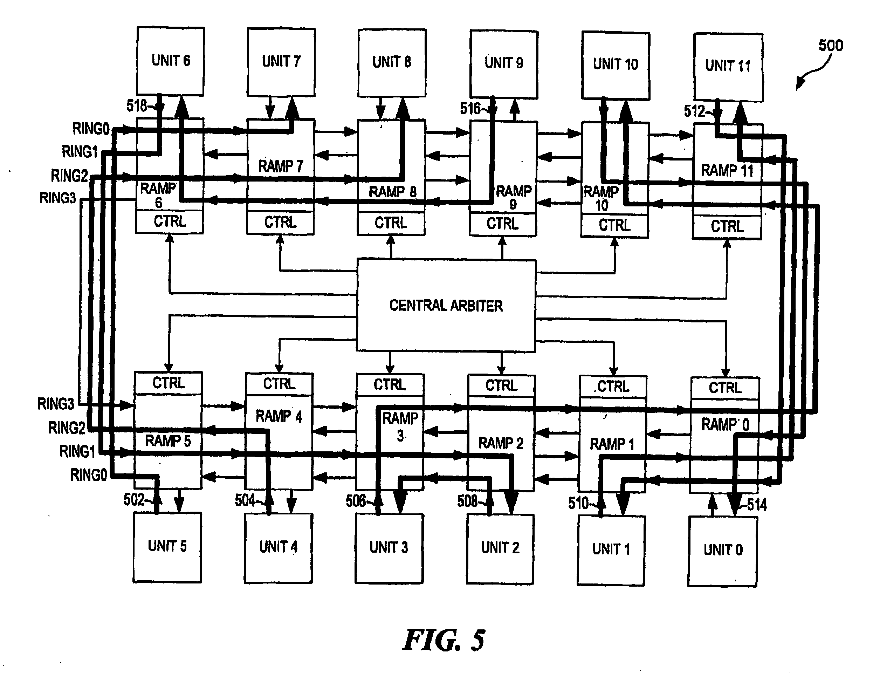

Referring to FIGURE 5 of the drawings, reference numeral 500 generally indicates a block diagram illustrating the ability of this hybrid crossbar switch to accomplish nine data transfers concurrently. FIGURE 5 is the same illustration as FIGURE 1 without reference numerals for all the components. Data path 502 signifies a data transfer from Unit 5 to Unit 7 on Ring0. Data path 504 signifies a data transfer from Unit 4 to Unit 8 on Ring2. Data path 506 signifies a data transfer from Unit 3 to Unit 10 on Ring3. Data path 508 signifies a data transfer from Unit 2 to Unit 3 on Ring0. Data path 510 signifies a data transfer from Unit 1 to Unit 11 on Ring1. Data path 512 signifies a data transfer from Unit 11 to Unit 1 on Ring0. Data path 514 signifies a data transfer from Unit 10 to Unit 0 on Ring2. Data path 516 signifies a data transfer from Unit 9 to Unit 6 on Ring3. Data path 518 signifies a data transfer from Unit 6 to Unit 2 on Ring1. These 9 data transfers can be accomplished concurrently without any conflicts.

The following details are implementation specific and only apply to this embodiment. Data transfer 516 begins with Unit 9 raising its data request line along with the destination unit ID. In this case the destination unit ID would identify Unit 6. The central arbiter collects this request and sends a grant to Unit 9 and Unit 6. Unit 9 then sends datatag data on the tag bus and subsequently sends data on the data bus to Ramp 9. Ramp 9 outputs this data on Ring3. Ramps 8, 7, and 6 receive passthru signals to allow this data to pass through on Ring3. The datatag data on the tag bus and the data on the data bus pass through Ramp 8, Ramp 7 and Ramp 6 on Ring3. During this process the central arbiter sends an EDV to Ramp 6. After the data has passed through Ramp 6, the controller on Ramp 6 passes the output to Unit 6. This is how a packet of data is transferred from Unit 9 to Unit 6 on Ring3. The procedure for data input and output between the bus unit and the ramp is shown in FIGURE 2. FIGURE 2 also illustrates the mechanics of a pass through operation.

This invention provides many advantages over the prior art. This hybrid crossbar data switch consumes less silicon area on the chip. Because each ramp is only interfacing with two other ramps the amount of logic and buses on the data chip is reduced. Only four sets of buses (rings) are needed, which also limits the corresponding logic to save space. This invention also drastically reduces the amount of wiring tracks. For a conventional crossbar data switch each port must be wired to every other port. For this modified crossbar switch each ramp only requires connections between adjacent data ramps. Furthermore, this modified crossbar switch retains a high peak bandwidth. As shown in FIGURE 5, large amounts of data can be transferred concurrently. This modified crossbar also uses less power than the conventional apparatuses. The central arbiter cuts off segments or data ramp devices of the data rings if they are not in use. Therefore, the unused segments are not clocked, which reduces power consumption. It is clear that this single port/multiple ring implementation of a hybrid crossbar partially non-blocking data switch is a vast improvement over the prior art devices.

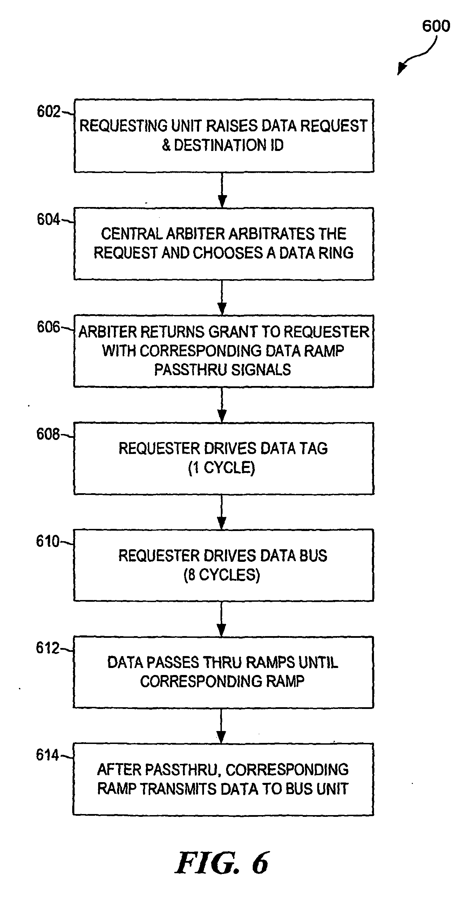

Referring to FIGURE 6 of the drawings, reference numeral 600 generally indicates a flow chart depicting the process of passing one data transfer granule from a requesting device to a corresponding device. The requesting device raises the data request and destination ID lines 602 to indicate a data transfer. The central arbiter receives the data request, arbitrates the request, and chooses a data ring 604. The central arbiter then returns a grant to the requestor, a grant to the corresponding device, and passthru signals 606. After receiving the grant, the requester drives the data tag for one cycle 608. Then the requester drives the data bus for eight cycles 610. The data tag data and the transfer data pass through the data ramps until reaching the corresponding data ramp 612. Once the data passes through the corresponding data ramp, the data is transmitted to the corresponding bus unit 614.

In the above example, the requester resides in the sender side of the data. However, the requester may reside in the receiver side.

### INDUSTRIAL APPLICABILITY

The present invention is used in the technical field of a data switch, and more particularly, of a data switch with a single port per attached unit and multiple rings.

## Claims

1. An on-chip data switch (100) that is managed by at least one central arbiter (112) for transferring data between multiple bus units (140, 142, ...162), said data switch comprising:
a plurality of bus units (140, 142, ...162);
a plurality of data transmission devices (114, 116, ...136), wherein each of the plurality of data transmission devices interfaces a corresponding bus unit of the plurality of bus units through at least one of a plurality of communication channels;
at least one data ring (102, 104) that provides a data connection between the plurality of data transmission devices, wherein each data transmission device is connected by the ring to the two adjacent data transmission devices; and
at least one central arbiter (112) for managing the transfer of data on the at least one data ring by sending control signals and interfacing to the plurality of data transmission devices for sending said control signals to the data transmission devices;
**characterised in that** the at least one central arbiter is configured to cut off a data transmission device of the data switch if the data transmission device is not used for data transmission so that the unused data transmission device is not clocked.

2. The data switch of Claim 1, wherein each bus unit of the plurality of bus units interfaces one data transmission device of the plurality of data transmission devices.

3. The data switch of Claim 1, wherein each data transmission device of the plurality of data transmission devices comprises:
a controller device;
a plurality of multiplexers (230, 232, ...236); and
a plurality of latches (222, 224, ...228).

4. The data switch of Claim 3, wherein the controller device interfaces the at least one central arbiter, and receives control signals from the at least one central arbiter.

5. The data switch of Claim 4, wherein the controller device is at least configured to manage the transfer of data on the data ring structure and the transfer of data on the communication channels associated with the corresponding bus unit, in response to the control signals.

6. The data switch of Claim 1, wherein the at least one data ring is designed to pass data in one direction between the plurality of data transmission devices.

7. The data switch of Claim 6 comprising at least two data rings and wherein the number of data rings is a multiple of two.

8. The data switch of Claim 7, wherein half of the data rings transfer data in one direction between the plurality of data transmission devices and half of the data rings transfer data in the opposite direction between the plurality of data transmission devices.

9. A method for transferring data on a chip between a plurality of bus units utilizing a data switch, comprising:
connecting a plurality of data transmission devices to a plurality of bus units, wherein each data transmission device of the plurality of data transmission devices interfaces a corresponding bus unit of the plurality of bus units;
implementing a data ring structure to connect the plurality of data transmission devices, wherein each data transmission device of the plurality of data transmission devices is connected by the data ring structure to the two adjacent data transmission devices; and
implementing at least one central arbiter for managing the transfer of data through the data ring structure by issuing control signals and interfacing to the plurality of data transmission devices for sending said control signals to the data transmission devices;
**characterised in that** the at least one central arbiter cuts off a segment of data transmission devices of the data switch if the segment of data transmission devices is not used for data transmission so that the unused data transmission devices are not clocked.

10. The method of Claim 9, wherein the step of connecting a plurality of data transmission devices to a plurality of bus units, further comprises configuring a plurality of controller devices to control the data transfers between each data transmission device and its corresponding bus unit and the data transfers between each data transmission device and its adjacent data transmission devices.

11. The method of Claim 9, wherein the step of implementing a data ring structure to connect the plurality of data transmission devices, further comprises implementing a plurality of data rings to transfer data between the plurality of data transmission devices.

12. The method of Claim 11, wherein the step of implementing a plurality of data rings, further comprises configuring the plurality of data rings such that half of the data rings transfer data in one direction and half of the data rings transfer data in the opposite direction.

13. The method of Claim 10, wherein the step of implementing at least one central arbiter, further comprises configuring the central arbiter to issue control signals to the plurality of controller devices.

## Patentansprüche

1. On-chip-Datenschalter (100) zum Übertragen von Daten zwischen mehreren Buseinheiten (140, 142, ...162), der von mindestens einem zentralen Vermittler (112) verwaltet wird, wobei der Datenschalter Folgendes umfasst:
mehrere Buseinheiten (140, 142, ...162);
mehrere Datenübertragungsvorrichtungen (114, 116, ...136), wobei jede der mehreren Datenübertragungsvorrichtungen durch mindestens einen der mehreren Kommunikationskanäle an eine entsprechende Buseinheit der mehreren Buseinheiten angeschaltet ist;
mindestens einen Datenring (102, 104), der eine Datenverbindung zwischen den mehreren Datenübertragungsvorrichtungen bereitstellt, wobei jede Datenübertragungsvorrichtung über den Ring mit den zwei benachbarten Datenübertragungsvorrichtungen verbunden ist; und
mindestens einen zentralen Vermittler (112) zum Verwalten der Datenübertragung auf dem mindestens einen Datenring durch Senden von Steuersignalen und Anschalten an die mehreren Datenübertragungsvorrichtungen, um die Steuersignale zu den Datenübertragungsvorrichtungen zu senden;
**dadurch gekennzeichnet, dass** der mindestens eine zentrale Vermittler ausgelegt ist, eine Datenübertragungsvorrichtung des Datenschalters abzutrennen, falls die Datenübertragungsvorrichtung nicht zur Datenübertragung verwendet wird, so dass die unbenutzte Datenübertragungsvorrichtung nicht getaktet wird.

2. Datenschalter nach Anspruch 1, wobei jede Buseinheit der mehreren Buseinheiten an eine Datenübertragungsvorrichtung der mehreren Datenübertragungsvorrichtungen angeschaltet ist.

3. Datenschalter nach Anspruch 1, wobei jede Datenübertragungsvorrichtung der mehreren Datenübertragungsvorrichtungen Folgendes umfasst:
eine Steuerungsvorrichtung;
mehrere Multiplexer (230, 232, ...236); und
mehrere Latches (222, 224, ...228).

4. Datenschalter nach Anspruch 3, wobei die Steuerungsvorrichtung an den mindestens einen zentralen Vermittler angeschaltet ist und Steuersignale von dem mindestens einen zentralen Vermittler empfängt.

5. Datenschalter nach Anspruch 4, wobei die Steuerungsvorrichtung mindestens ausgelegt ist, als Antwort auf die Steuersignale die Datenübertragung auf der Datenringstruktur und die Datenübertragung auf den mit der entsprechenden Buseinheit verbundenen Kommunikationskanälen zu verwalten.

6. Datenschalter nach Anspruch 1, wobei der mindestens eine Datenring ausgelegt ist, Daten zwischen den mehreren Datenübertragungsvorrichtungen in einer Richtung weiterzureichen.

7. Datenschalter nach Anspruch 6, der mindestens zwei Datenringe umfasst, und wobei die Anzahl der Datenringe ein Vielfaches von zwei ist.

8. Datenschalter nach Anspruch 7, wobei eine Hälfte der Datenringe Daten in einer Richtung zwischen den mehreren Datenübertragungsvorrichtungen überträgt und die andere Hälfte der Datenringe Daten in der Gegenrichtung zwischen den mehreren Datenübertragungsvorrichtungen überträgt.

9. Verfahren zur Datenübertragung auf einem Chip zwischen mehreren einen Datenschalter verwendenden Buseinheiten, umfassend:
Verbinden mehrerer Datenübertragungsvorrichtungen mit mehreren Buseinheiten, wobei jede Datenübertragungsvorrichtung der mehreren Datenübertragungsvorrichtungen an eine entsprechende Buseinheit der mehreren Buseinheiten angeschaltet ist;
Umsetzen einer Datenringstruktur, um die mehreren Datenübertragungsvorrichtungen zu verbinden, wobei jede Datenübertragungsvorrichtung der mehreren Datenübertragungsvorrichtungen über die Datenringstruktur mit den zwei benachbarten Datenübertragungsvorrichtungen verbunden ist; und
Umsetzen mindestens eines zentralen Vermittlers zum Verwalten der Datenübertragung über die Datenringstruktur durch Ausgabe von Steuersignalen und Anschalten an die mehreren Datenübertragungsvorrichtungen, um die Steuersignale zu den Datenübertragungsvorrichtungen zu senden;
**dadurch gekennzeichnet, dass** der mindestens eine zentrale Vermittler ein Segment von Datenübertragungsvorrichtungen des Datenschalters abtrennt, falls das Segment von Datenübertragungsvorrichtungen nicht zur Datenübertragung verwendet wird, so dass die unbenutzten Datenübertragungsvorrichtungen nicht getaktet werden.

10. Verfahren nach Anspruch 9, wobei der Schritt des Verbindens mehrerer Datenübertragungsvorrichtungen mit mehreren Buseinheiten ferner umfasst, mehrere Steuerungsvorrichtungen auszulegen, die Datenübertragungen zwischen jeder Datenübertragungsvorrichtung und ihrer entsprechenden Buseinheit und die Datenübertragungen zwischen jeder Datenübertragungsvorrichtung und ihrer benachbarten Datenübertragungsvorrichtungen zu steuern.

11. Verfahren nach Anspruch 9, wobei der Schritt der Umsetzung einer Datenringstruktur zur Verbindung der mehreren Datenübertragungsvorrichtungen ferner Umsetzung mehrerer Datenringe zur Datenübertragung zwischen den mehreren Datenübertragungsvorrichtungen umfasst.

12. Verfahren nach Anspruch 11, wobei der Schritt der Umsetzung mehrerer Datenringe ferner umfasst, die mehreren Datenringe so auszulegen, dass eine Hälfte der Datenringe Daten in einer Richtung überträgt und die andere Hälfte der Datenringe Daten in der Gegenrichtung überträgt.

13. Verfahren nach Anspruch 10, wobei der Schritt der Umsetzung mindestens eines zentralen Vermittlers ferner umfasst, den zentralen Vermittler auszulegen, Steuersignale an die mehreren Steuerungsvorrichtungen auszugeben.

## Revendications

1. Commutateur de données sur puce (100) qui est géré par au moins un arbitre central (112) pour transférer des données entre de multiples unités de bus (140, 142, ..., 162), ledit commutateur de données comprenant :
une pluralité d'unités de bus (140, 142, ..., 162) ;
une pluralité de dispositifs de transmission de données (114, 116, ..., 136), chacun de la pluralité de dispositifs de transmission de données s'interfaçant avec une unité de bus correspondante de la pluralité d'unités de bus par le biais d'au moins l'un d'une pluralité de canaux de communication ;
au moins un anneau de données (102, 104) qui établit une connexion de données entre la pluralité de dispositifs de transmission de données, chaque dispositif de transmission de données étant connecté par l'anneau aux deux dispositifs de transmission de données adjacents ; et
au moins un arbitre central (112) pour gérer le transfert de données sur l'au moins un anneau de données en envoyant des signaux de commande et s'interfacer avec la pluralité de dispositifs de transmission de données pour envoyer lesdits signaux de commande aux dispositifs de transmission de données ;
**caractérisé en ce que** l'au moins un arbitre central est configuré pour couper un dispositif de transmission de données du commutateur de données si le dispositif de transmission de données n'est pas utilisé pour la transmission de données de telle sorte que le dispositif de transmission de données inutilisé ne soit pas cadencé.

2. Commutateur de données selon la revendication 1, dans lequel chaque unité de bus de la pluralité d'unités de bus s'interface avec un dispositif de transmission de données de la pluralité de dispositifs de transmission de données.

3. Commutateur de données selon la revendication 1, dans lequel chaque dispositif de transmission de données de la pluralité de dispositifs de transmission de données comprend :
un dispositif contrôleur ;
une pluralité de multiplexeurs (230, 232, ..., 236) ; et
une pluralité de verrous (222, 224, ..., 228).

4. Commutateur de données selon la revendication 3, dans lequel le dispositif contrôleur s'interface avec l'au moins un arbitre central, et reçoit des signaux de commande depuis l'au moins un arbitre central.

5. Commutateur de données selon la revendication 4, dans lequel le dispositif contrôleur est au moins configuré pour gérer le transfert de données sur la structure d'anneau de données et le transfert de données sur les canaux de communication associés à l'unité de bus correspondante, en réponse aux signaux de commande.

6. Commutateur de données selon la revendication 1, dans lequel l'au moins un anneau de données est conçu pour passer des données dans un sens entre la pluralité de dispositifs de transmission de données.

7. Commutateur de données selon la revendication 6, comprenant au moins deux anneaux de données et dans lequel le nombre d'anneaux de données est un multiple de deux.

8. Commutateur de données selon la revendication 7, dans lequel la moitié des anneaux de données transfèrent des données dans un sens entre la pluralité de dispositifs de transmission de données et la moitié des anneaux de données transfèrent des données dans le sens opposé entre la pluralité de dispositifs de transmission de données.

9. Procédé de transfert de données sur une puce entre une pluralité d'unités de bus en utilisant un commutateur de données, comprenant :
la connexion d'une pluralité de dispositifs de transmission de données à une pluralité d'unités de bus, chaque dispositif de transmission de données de la pluralité de dispositifs de transmission de données s'interfaçant avec une unité de bus correspondante de la pluralité d'unités de bus ;
la mise en oeuvre d'une structure d'anneau de données pour connecter la pluralité de dispositifs de transmission de données, chaque dispositif de transmission de données de la pluralité de dispositifs de transmission de données étant connecté par la structure d'anneau de données aux deux dispositifs de transmission de données adjacents ; et
la mise en oeuvre d'au moins un arbitre central pour gérer le transfert de données par le biais de la structure d'anneau de données en envoyant des signaux de commande et s'interfacer avec la pluralité de dispositifs de transmission de données afin d'envoyer lesdits signaux de commande aux dispositifs de transmission de données ;
**caractérisé en ce que** l'au moins un arbitre central coupe un segment de dispositifs de transmission de données du commutateur de données si le segment de dispositifs de transmission de données n'est pas utilisé pour la transmission de données de telle sorte que les dispositifs de transmission de données inutilisés ne soient pas cadencés.

10. Procédé selon la revendication 9, dans lequel l'étape de connexion d'une pluralité de dispositifs de transmission de données à une pluralité d'unités de bus comprend en outre la configuration d'une pluralité de dispositifs contrôleurs pour commander les transferts de données entre chaque dispositif de transmission de données et son unité de bus correspondante et les transferts de données entre chaque dispositif de transmission de données et ses dispositifs de transmission de données adjacents.

11. Procédé selon la revendication 9, dans lequel l'étape de mise en oeuvre d'une structure d'anneau de données pour connecter la pluralité de dispositifs de transmission de données comprend en outre la mise en oeuvre d'une pluralité d'anneaux de données pour transférer des données entre la pluralité de dispositifs de transmission de données.

12. Procédé selon la revendication 11, dans lequel l'étape de mise en oeuvre d'une pluralité d'anneaux de données, comprend en outre la configuration de la pluralité d'anneaux de données de telle sorte que la moitié des anneaux de données transfèrent des données dans un sens et la moitié des anneaux de données transfèrent des données dans le sens opposé.

13. Procédé selon la revendication 10, dans lequel l'étape de mise en oeuvre d'au moins un arbitre central comprend en outre la configuration de l'arbitre central pour envoyer des signaux de commande à la pluralité de dispositifs contrôleurs.
